# EUROPEAN PATENT APPLICATION

(11) **EP 4 814 363 A1**
(43) Date of publication of application: **30.09.2026**
(21) Application number: 25166446.2
(22) Date of filing: 26.03.2025
(51) Int. Cl.: F17C 3/08, B64D 37/04, B64D 37/06, F16F 7/12

(54) **HYDROGEN TANK OF OR FOR AN AIRCRAFT, METHOD FOR PRODUCING SUCH HYDROGEN TANK, AND FUSELAGE**

(71) Applicant: AIRBUS Operations GmbH, 21129 Hamburg (DE)
(72) Inventor: Siemann, Martin, 21129 Hamburg (DE)
(74) Representative: Marschall, Stefan

(57) **Abstract**

Disclosed is a hydrogen tank 100, 100a, 100b, 100c, 100d of or for an aircraft, the hydrogen tank comprising an inner hull 30 bordering a tank space I to be filled with liquid hydrogen, an outer hull 10, 10a, 10b, 10c, 10d encasing the inner hull 30 with an insulation layer 20 in-between, and a tank reinforcement structure 40, 40a, 40b, 40c, 40d. The tank reinforcement structure 40, 40a, 40b, 40c, 40d comprises one or various rib/s 41₁, 41₂, 41₃, 41'₃, 41a₁, 41a₂, 41a₃, 41b₁, 41b₂, 41c₁, 41c₂, 41d₁ which is/are attached to the outer hull 10, 10a, 10b, 10c, 10d and/or to the inner hull 30, and which include/s a lattice configuration forming an energy absorbing structure.

Further disclosed are a method of producing such hydrogen tank, and a fuselage comprising such hydrogen tank.

## Description

The present invention concerns a hydrogen tank of or for an aircraft. The invention further concerns a method for producing such hydrogen tank, and a fuselage, of an aircraft, which comprises such hydrogen tank.

Aircraft typically comprise one or more fuel tank/s containing a fuel to be supplied to the aircraft's one or several propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been searched for, and hydrogen powered aircraft engines have emerged to provide a promising performance.

The hydrogen employed in such aircraft can be stored and transported in its liquid state under cryogenic conditions in hydrogen tanks (being pressure vessels configured to contain liquid hydrogen) which may be installed in the unpressurised aft of a fuselage of the respective aircraft, in particular in a so-called caudal tandem configuration. Such hydrogen tanks typically are configured as double-walled, vacuum insulated tanks formed by an outer hull, an inner hull and a vacuum layer in-between. Therein, a tank reinforcement structure provides stability of the tank and thereby ensures that the hydrogen tank withstands all possible loading conditions such as, e.g., the pressure differences between interior of the hydrogen and the environment thereof.

It is an object of the present invention to provide an improved hydrogen tank of or for an aircraft. Further objects are to provide a method of producing such hydrogen tank, and to provide an improved fuselage of or for an aircraft.

The objects are achieved with a hydrogen tank according to claim 1, with a method according to claim 12, and with a fuselage according to claim 13. Advantageous embodiments are disclosed in the dependent claims, in the description, and in the figures.

A hydrogen tank according to the present invention forms part of an aircraft or is at least designated to form part of an aircraft. Therein, the hydrogen tank is designated to contain liquid hydrogen, in particular liquid hydrogen to be supplied to a propulsion engine of the aircraft.

The hydrogen tank comprises an inner hull bordering a tank space to be filled with liquid hydrogen, an outer hull encasing the inner hull with an insulation layer in-between, and a tank reinforcement structure. The insulation layer may in particular be configured as a vacuum insulation layer. The tank reinforcement structure comprises one or various rib/s (reinforcing the hydrogen tank), wherein each rib is (respectively) attached to the outer hull of the hydrogen tank and/or to the inner hull of the hydrogen tank. Therein, the rib/s include/s a (respective) lattice configuration which forms an energy absorbing structure.

In particular, at least one of the rib/s may be arranged on an outer surface of the outer hull of the hydrogen tank, and/or at least one of the rib/s may be arranged between the outer hull and the inner hull (such as arranged on an inner surface of the outer hull and/or on an outer surface of the inner hull).

As is to be understood, expressions such as "at least one rib of the one or various rib/s" in this document refer to the one rib in case the tank reinforcement structure comprises only one such rib, and to one or more of the ribs in case the tank reinforcement structure comprises various such ribs.

By virtue of the included lattice configuration, the rib/s thus comprise/s a criss-crossed framework including a plurality of voids. For instance, such framework may include a network of connected and/or merged brace portions framing such voids.

Due to its/their lattice configuration forming an energy absorbing structure, the rib/s thus provide additional protection of the hydrogen tank in a potential crash scenario. Therein, the porosity and the voids the lattice configuration includes advantageously maintain insulation properties of the insulation layer and provide for a low structural weight. Moreover, the rib/s reinforce/s the hydrogen tank. Accordingly, the tank reinforcement structure of a hydrogen tank according to the present invention is multifunctional, as it integrates the function of the energy absorption into the tank reinforcement structure. As a consequence, the crashworthiness is improved in a particular weight-saving manner, as the provision of dedicated energy absorption means may be avoided or at least reduced. Additionally or alternatively, further energy absorption means possibly provided in the aircraft may be supplemented, such that a backup/ reserve protection can be realised.

As is to be understood, in embodiments in which at least one of the rib/s is arranged between the outer hull and the inner hull, the energy absorption may come into effect once there is sufficient displacement between the outer and the inner hull

Moreover, the attachment of the tank reinforcement structure's rib/s respectively to the outer hull and/or to the inner hull facilitates securing, when installing the hydrogen tank in a fuselage of the aircraft, that an advantageous space is available for energy absorption during a potential crash scenario. Indeed, accelerations which in a potential crash scenario might act on the hydrogen tank are proportional to a respective stroke distance needed to slow down the hydrogen tank from an initial impact velocity until its motion is stopped. By allowing the reinforcement structure to fail in a controlled manner, the stroke distance can be increased by an amount at which the energy absorption structure can be squeezed in a potential crash scenario. As a consequence, the crash performance is improved in terms of the tank accelerations and also in terms of overall energy absorption, because part of the total crash energy can be absorbed by the tank reinforcement structure such that energy that needs to be absorbed elsewhere is reduced.

Additionally, due to the attachment of the rib/s to the outer or inner hull, the crash absorbing functionality of the rib/s may be employed only in a last stage of a potential crash scenario, e.g., after the hydrogen tank has been shifted, due to a respective crash impact, so as to strike against another component of the fuselage, such as a frame, a stringer, a skin, or a bulkhead thereof. Therefore, crash scenarios with lower kinetic energy (e.g., through lower impact velocity or lower impacting mass) may only employ further crash energy absorption means preferably arranged in a fuselage section surrounding the hydrogen tank, whereas the energy absorption functionality of the rib/s of the tank reinforcement structure may be utilised only in crash scenarios with higher kinetic energy.

According to advantageous embodiments, at least one of the rib/s, in particular its lattice configuration is at least partially made of one or various metal/s.

The outer hull of the hydrogen tank may preferably be formed by a tubular wall whose opposite ends are closed by respective domes. The tubular wall may in particular run around a centre axis which may define a longitudinal centre axis of the hydrogen tank. According to advantageous embodiments, the tubular wall comprises a cylindrical section and/or a conical section. The inner hull of the hydrogen may have the same shape as the outer hull while being smaller, e.g., scaled thereto. In particular, the outer hull may encase the inner hull with a constant distance thereto.

The one or various rib/s of the tank reinforcement structure of a hydrogen tank according to the present invention is/are preferably configured as longitudinal component/s or branch/es, of the tank reinforcement structure, which in its/their (respective) longitudinal direction run/s along the outer hull and/or the inner hull of the hydrogen tank.

In particular, at least one of the rib/s may run, in its longitudinal direction, in circumferential direction of the hydrogen tank or inclined to such circumferential direction; as is to be understood, the term "circumferential direction of the hydrogen tank" relates to a longitudinal centre axis of the hydrogen tank. In particular, the rib/s may respectively form a frame surrounding the longitudinal centre axis of the hydrogen tank, a stringer running in a longitudinal direction of the hydrogen tank, or a further (at least partially straight and/or at least partially curved) longitudinal formation, for instance. In embodiments where the tank reinforcement structure comprises various ribs, these may differ from each other in their orientation, possibly meeting (or even intersecting) each other in a point of convergence.

In particular, with its said one or various rib/s, the tank reinforcement structure of a hydrogen tank according to the present invention may extend on a tubular wall of the outer hull, on at least one dome of the outer or inner hull, on a tubular wall of the inner hull and/or on at least one dome of the inner hull.

Additionally or alternatively, at least one of the one or various rib/s of the tank reinforcement structure may form a closed curve surrounding the tank space of the hydrogen tank, may comprise at least a section which runs parallel or inclined to a longitudinal centre axis of the hydrogen tank and/or may comprise at least a section which runs around a longitudinal centre axis of the hydrogen tank. Thereby, particularly effective reinforcement and energy absorption can be achieved.

At least one rib of the one or various rib/s of the tank reinforcement structure may include at least one section in which the at least one rib has parallel lateral faces (i.e., faces extending in a longitudinal direction of the respective rib and in a direction away from the outer and/or inner hull the rib is attached to). In such section, the respective rib thus projects from the outer or inner hull, respectively, with a constant width.

According to advantageous embodiments of the present invention, at least one of the one or various rib/s includes at least one section which widens towards its edge of attachment, i.e., towards its edge which is attached to the inner or outer hull, respectively. In such section, the at least one rib may thus have a shape which is tapered in a direction away from the joint of attachment. Such embodiments facilitate a particularly high robustness and stability.

According to advantageous embodiments of the present invention, at least one of the rib/s comprises a solid strip at its edge of attachment, and/or a solid strip forming a surface facing away from the edge of attachment of the respective rib. Thereby, an improved strength of the rib can be achieved. In particular, such solid strip facing away from the edge of attachment may serve to distribute loads into the energy absorbing structure formed by the lattice configuration and, under normal operation of the aircraft, it is perfect to carry tank loads resulting from tank pressurization.

Following its longitudinal direction, at least one rib of the rib/s of the tank reinforcement structure may advantageously vary in a geometry of its lattice configuration, in its material, and/or in at least one of its dimensions (such as its extent of projection from the outer or inner hull, and/or its width (being its dimension orthogonal to its longitudinal direction and to its direction of projection from the outer or inner hull)). The at least one rib may thus include various zones having different respective properties.

Additionally or alternatively, the tank reinforcement structure may comprise at least two ribs (including a lattice configuration) which differ from each other at least in their respective mean extent of projection from the outer or inner hull, respectively, in a respective width (measured orthogonal to their respective longitudinal direction) of their edge of attachment, in their respective lattice configuration's geometry, and/or in at least one material they are formed of.

Due to these differences, the tank reinforcement structure may advantageously provide for a high specific reinforcing and energy absorbing strength respectively expected to be convenient in a respective region of the hydrogen tank, while nonetheless an advantageously low weight of the tank reinforcement structure may be realised.

In particular, at least one of the rib/s thus can be purpose-tailored, such as depending on a location on the outer and/or inner hull the respective rib is attached to. Therein, as compared to other configurations (such as honeycomb structures providing uniaxial capability only, or foam structures having a highly irregular, randomly distributed three-dimensional cell configuration), the lattice configuration of the rib/s allows for a large freedom of design.

According to advantageous embodiments of the present invention, at least one of the one or various rib/s of the tank reinforcement structure includes a lattice configuration which is auxetic in at least one section of the at least one rib. Accordingly, in such section, the lattice configuration of the at least one rib has a negative Poisson number, which may be due to a material of the at least one rib in the section and/or due to a design of the lattice configuration. Such auxetic property serves to directing parts of the lattice configuration toward its centre when being loaded, thereby further improving the energy absorption capability of the respective rib under dynamic conditions (relating to crash energy absorption).

At least one of the one or various rib/s of the tank reinforcement structure of a hydrogen tank according to the present invention is preferably arranged at least partially in a bottom region of the hydrogen tank. Additionally or alternatively, at least one of the rib/s of the tank reinforcement structure may preferably at least partially be arranged in a region which in a designated installation orientation within a fuselage of the aircraft directs forward (i.e., in a designated flying direction of the aircraft).

The tank reinforcement structure may include, further to the one or various rib/s including a lattice configuration, at least one solid reinforcement profile. Such construction may facilitate a simplified production of the hydrogen tank. It may advantageously be combined to arranging at least one of the rib/s including the lattice configuration at least in a bottom region of the hydrogen tank and/or in a forward region thereof, as mentioned above.

The hydrogen tank according to the present invention may be configured to be supported, in an interior of a fuselage of the aircraft, by means of a polar support concept (according to which the hydrogen tank is supported at a centre region of at least one of its domes), a dome support concept (according to which the hydrogen tank is supported at a periphery of at least one of its domes) and/or a continuous support concept (according to which the hydrogen tank is supported at several points along a length of its tubular wall).

According to advantageous embodiments, the hydrogen tank comprises one or various bracket/s mounted to the tank reinforcement structure, in particular, to the lattice configuration of at least one of the rib/s, the brackets configured to serve as attachment point/s for enabling system installation (thus, connection to an electrical and/or a mechanical system such as a hydrogen piping) of the hydrogen tank within a fuselage of the aircraft. Such bracket/s may in particular be configured to facilitate an advantageous snap- and-click installation of the hydrogen tank in the fuselage. According to specific examples, such bracket/s may be fastened to a respective interface point such as a lug the tank reinforcement structure may exhibit. In particular, such lug/s may be integrated in the lattice configuration of at least one of said rib/s of the tank reinforcement structure. Such embodiments allow for introducing particularly high loads.

At least a portion of the tank reinforcement structure of a hydrogen tank according to the present invention may advantageously be formed by means of additive layer manufacturing such as powder bed fusion, selective laser sintering, selective laser melting, electron rib melting, or direct energy deposition, for example. At least one of the rib/s may be printed, in such additive layer manufacturing procedure, on outer hull or the inner hull. Additionally or alternatively, at least one of the rib/s may be attached (e.g., glued or welded) to the outer or inner hull as a component produced in advance (such as by said additive layer manufacturing).

A method according to the present invention serves to producing a hydrogen tank according to an embodiment of the present invention. Therein, analogously to what is mentioned above, at least a portion of at least one of the rib/s of the tank reinforcement structure is produced by way of additive layer manufacturing (such as powder bed fusion, selective laser sintering, selective laser melting, electron rib melting, or direct energy deposition, for example).

In particular, the method may comprise printing such portion of the rib, by way of said additive layer manufacturing, on outer hull and/or the inner hull. Additionally or alternatively, the method may comprise producing such portion, by way of said additive layer manufacturing, as a separate component, and thereafter joining it to the outer hull and/or to the inner hull.

Such additive layer manufacturing facilitates the production of particularly advantageous, possibly complex geometric structures of the lattice configuration. Preferably, in said additive layer manufacturing, at least one metallic material is used.

A fuselage according to the present invention comprises, in its unpressurised aft space, at least one hydrogen tank according to an embodiment of the present invention.

In addition to the tank reinforcement structure, also a reinforcement structure of the fuselage (such as a frame thereof, for example) may comprise at least a portion featuring a lattice structure, thereby exhibiting an energy absorbing configuration. In this way, the stroke distance can be advantageously further increased by an amount at which said portion of the fuselage's reinforcement structure can be squeezed in a potential crash scenario. In an orientation designated for normal flight of an aircraft comprising the fuselage, such portion may advantageously be arranged below the hydrogen tank. Said portion may, for example, be at least a section of a frame of the fuselage or of a stringer of the fuselage.

In what follows, preferred embodiments of the present invention are explained with respect to the accompanying drawings. As is to be understood, the various elements and components are depicted as examples only, may be facultative and/or combined in a manner different than that depicted. Reference signs for related elements are to some extend used comprehensively and not necessarily defined again for each figure, and the same holds for evident analogies between the figures.

Shown are schematically in
- Fig. 1a:: a hydrogen tank according to an exemplary embodiment of the present invention in a first state within a fuselage;
- Fig. 1b:: the hydrogen tank of Fig. 1a in a second state within the fuselage;
- Figs. 2a - 2c:: hydrogen tanks according to exemplary embodiments of the present invention with their respective design of a tank reinforcement structure; and
- Fig. 3:: an exemplary spacing model of a hydrogen tank within a fuselage.

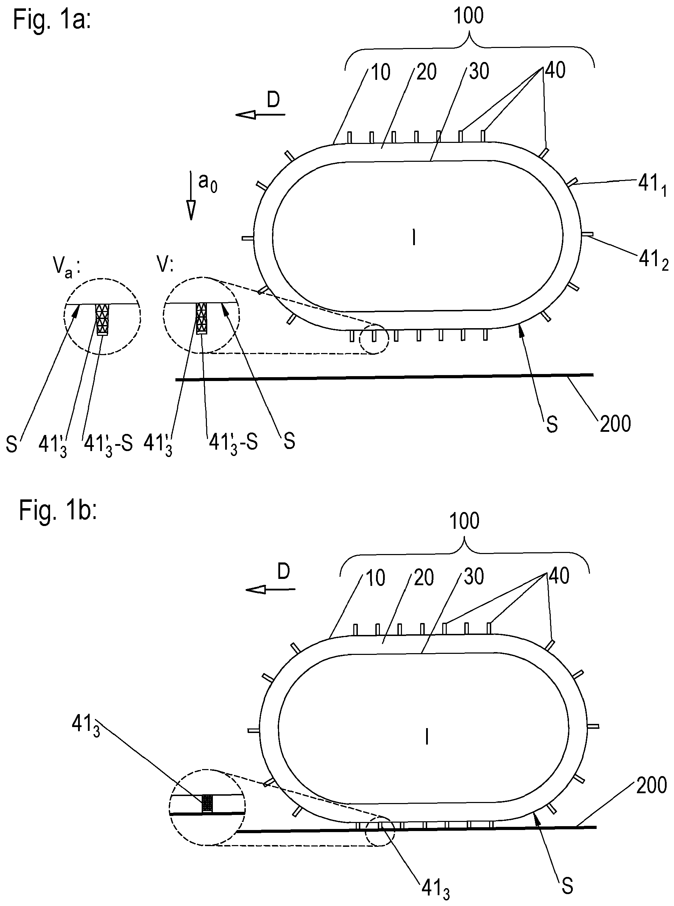

Figures 1a, 1b each provide a sectional schematic view of a hydrogen tank 100 according to an exemplary embodiment of the present invention in an orientation designated for flying in a designated direction D and in a respective situation, the section taken parallel to the designated flying direction D (in particular, in an x-z-plane). The hydrogen tank 100 comprises an inner hull 30 which borders a tank space I to be filled with liquid hydrogen (not shown) and which is encased by an outer hull 10 with an insulation layer 20 in-between. The insulation layer 20 may in particular be configured as a vacuum insulation layer.

The hydrogen tank 100 further comprises a tank reinforcement structure 40 comprising various ribs of which for clarity reasons only ribs 41₁, 41₂, 41₃ are referenced in Figures 1a, 1b.

In the embodiment shown, the ribs 41₁, 41₂, 41₃ are attached to the outer hull 10 of the hydrogen tank 100, more specifically, to the outer surface S of the outer hull 10. Therein, although in the sectional view provided by Figures 1a, 1b the ribs are visible only in cross sections orthogonal to their longitudinal extension, the ribs (longitudinally) extend along the outer surface S of the outer hull 10.

As apparent from the enlarged detail view V of rib 41₃, the ribs include a lattice configuration, forming a criss-crossed framework framing a plurality of voids. As explained above, such lattice configuration in particular provides for a lightweight structure having particularly advantageous and efficient energy absorption properties.

As further seen in Figures 1a, 1b, the ribs 41₁, 41₂, 41₃ comprised by the tank reinforcement structure project from the outer surface S from the outer hull 10 with a constant width. Accordingly, in the sectional view showing the ribs in cross section orthogonal to their respective longitudinal direction, the ribs have parallel lateral faces.

Detail view Vₐ in Figure 1a illustrates an alternative shape at least one rib of the tank reinforcement structure might have in accordance with the present invention: In this case, the rib 41'₃ widens towards the outer surface S. In the depicted cross section orthogonal to its respective longitudinal direction, the rib 41'₃ (in particular, its lattice configuration) thus has lateral faces which are tapered in a direction away from the outer surface S of the outer hull 10.

Both the rib 41₃ and the alternative rib 41'₃ are seen, in the detail views V, Vₐ, respectively, to comprise a solid strip 41₃-s, 41'₃-s respectively forming a surface facing away from the outer surface S of the outer hull 10. Such solid strip 41₃-s, 41'₃-s serves to distribute loads into the energy absorbing structure formed by the lattice configuration.

Additionally or alternatively (and though not shown), the ribs might comprise a solid strip at the opposite side, thus, at an edge of attachment to the outer surface S of the outer hull. Such strips increase a durability and strength of the respective rib.

Under normal operation of the aircraft, both said types of the strips are perfect to carry tank loads resulting from tank pressurization.

Figure 1a shows the hydrogen tank 100 in a first stage in which the hydrogen tank 100 is mounted inside a hull 200 of a fuselage of an aircraft. Therein, Figure 1a illustrates the moment of a potential acceleration a₀ acting on the hydrogen tank 100, thereby forcing the hydrogen tank 100 towards the hull 200 of the fuselage.

Figure 1b illustrates a situation in which, resulting from the acceleration a₀, hydrogen tank 100 has impinged on the hull 200, whereby the rib 41₃ and of the further, non-referenced ribs compressed by the hull 200 of the fuselage have been squeezed.

However, the outer hull 10 and, therewith, also the inner hull 30 and the insulation layer 20 encased by the outer hull 10 in this scenario have been successfully protected.

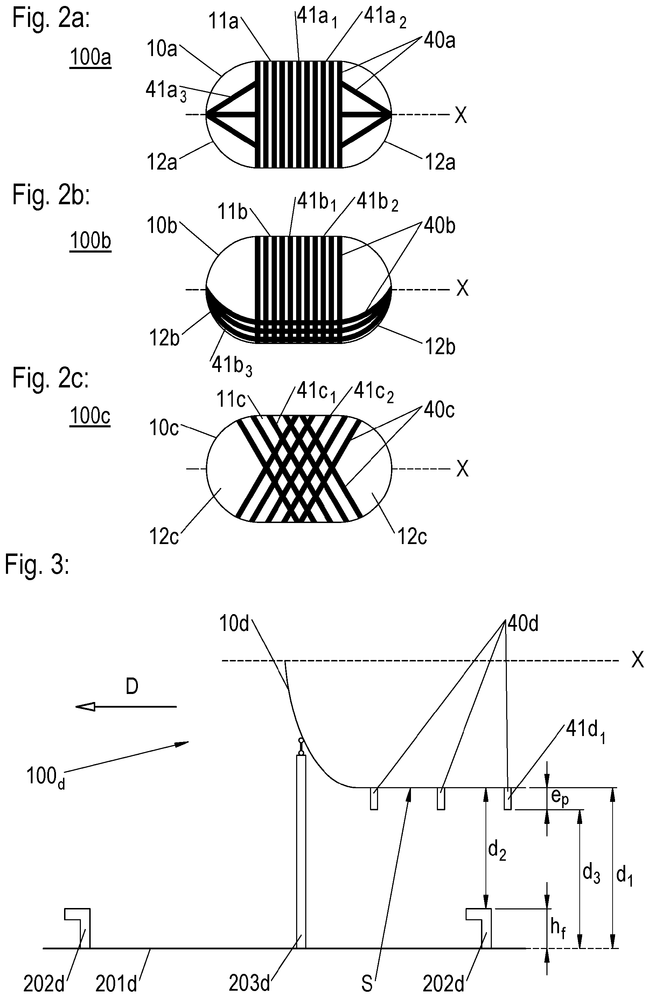

Figures 2a - 2c depict hydrogen tanks 100a, 100b, 100c according to exemplary embodiments of the present invention in respective side views, thereby illustrating respective arrangements of the respective tank reinforcement structure 40a, 40b, 40c on the outer surface of the respective outer hull 10a, 10b, 10c.

In the embodiment shown in Figures 2a, 2b, the tank reinforcement structure 40a, 40b includes ribs (only ribs 41a₁, 41a₂ and 41b₁, 41b₂ of which are referenced for clarity purposes) respectively extending on a tubular wall 11a, 11b of the respective outer hull 10a, 10b of the hydrogen tank 100a, 100b. Therein, these ribs 41a₁, 41a₂, 41b₁, 41b₂ each form a frame surrounding the outer hull 10a, 10b in a circumference direction orthogonally to a longitudinal centre axis X of the respective hydrogen tank 100a, 100b. In particular, with respect to said longitudinal centre axis X, the ribs 41a₁, 41a₂ of tank 100a and the ribs 41b₁, 41b₂ are arranged coaxially to each other, respectively.

The hydrogen tanks 100a, 100b shown in Figures 2a, 2b further each comprise ribs (only ribs 41a₃, 41b₃ of which are referenced for clarity purposes) extending, at least with a section thereof, on the domes of the outer hull 10a, 10b, the domes closing the respective tubular wall 11a, 11b at its opposite ends.

Therein, in case of the embodiment shown in Figure 2a, the ribs 41a₃ respectively meet with each other, at a first end thereof, in a respective centre of the domes. At their respective second, opposite end, the ribs 41a₃ meet with a closest one of the ribs 41a₁, 41a₂ respectively forming a frame.

In the case of the embodiment illustrated, in an orientation designated for normal flight, in Figure 2b, the ribs 41b₃ extend in a longitudinal direction of the hydrogen tank 100b and connect the respective centres of the domes 12b. These ribs 41b₃ are arranged only in a bottom region of the hydrogen tank, and they each include a section running along the tubular wall 11b and parallel to the longitudinal centre axis X of the hydrogen tank 100b, thereby crossing the ribs 41b₁, 41b₂ respectively forming a frame.

In the embodiment shown in Figure 2c, the ribs (only ribs 41c₁, 41c₂ of which are referenced for clarity purposes) are arranged inclined to the longitudinal centre axis X of the hydrogen tank 100c, wherein intersections result from different angles of inclination. The ribs 41c₁, 41c₂ run (predominantly) along a tubular wall 11c of the outer hull 10c of the hydrogen tank 100c, whereas the centre regions of the domes 12c in this case are void of ribs.

In Figure 3, an exemplary spacing model of a hydrogen tank 100d according to an embodiment of the present invention is illustrated in a sectional view along a longitudinal axis X of the hydrogen tank and in an orientation designated for normal flight in a direction D. Therein, of the hydrogen tank 100d, only the outer hull 10d and the tank reinforcement structure 10d are partially depicted.

As indicated in Figure 3, the ribs of the tank reinforcement structure 10d, only rib 41d₁ of which is referenced in the figure, projects from the surface S of the outer hull 10d by an extent eₚ of projection.

The hydrogen tank 10d is installed in accordance with a dome support concept by means of a plurality of tank support elements 203d, only one of which is visible in Figure 3. Thereby, as apparent from Figure 3, the hydrogen tank 10d is supported against a shell 201d of a fuselage, the shell being reinforced by a fuselage reinforcement structure comprising frames 202d each having a height h_{f}. A distance between the shell 201d and the surface S of the outer hull 10d of the hydrogen tank 100d is d₁, and a distance between said surface S and the frames 202d (at their closest point) is d₂.

A distance d₃ between the shell 201d and the ribs 40d preferably is chosen so as to ensure that an optimal stroke and thus energy absorption is achieved.

According to advantageous embodiments, the fuselage reinforcement structure, in particular at least one of the frames 202d, may at least in a portion thereof include a lattice structure (not visibly in Figure 3). In particular, in the orientation designated for normal flight, such portion may advantageously be located below the hydrogen tank 10d.

Disclosed is a hydrogen tank 100, 100a, 100b, 100c, 100d of or for an aircraft, the hydrogen tank comprising an inner hull 30 bordering a tank space I to be filled with liquid hydrogen, an outer hull 10, 10a, 10b, 10c, 10d encasing the inner hull 30 with an insulation layer 20 in-between, and a tank reinforcement structure 40, 40a, 40b, 40c, 40d. The tank reinforcement structure 40, 40a, 40b, 40c, 40d comprises one or various rib/s 41₁, 41₂, 41₃, 41'₃, 41a₁, 41a₂, 41a₃, 41b₁, 41b₂, 41c₁, 41c₂, 41d₁ which is/are attached to the outer hull 10, 10a, 10b, 10c, 10d and/or to the inner hull 30, and which include/s a lattice configuration forming an energy absorbing structure.

Further disclosed are a method of producing such hydrogen tank, and a fuselage comprising such hydrogen tank.

### Reference signs

10, 10a, 10b, 10c, 10d outer hull
11a, 11b, 11c, 11d tubular wall
12a, 12b dome of outer hull
20 insulation layer
30 inner hull
40, 40a, 40b, 40c, 40d tank reinforcement structure
41₁, 41₂, 41₃, 41'₃ rib
41a₁, 41a₂, 41a_{3,} rib
41b₁, 41b₂, 41b₃ rib
41c₁, 41c₂, 41d₁ rib
41₃-s, 41'₃-s solid strip forming a surface facing away from the outer surface of the outer hull
200 hull of fuselage
201d shell of fuselage
202d frame of fuselage reinforcement structure
203d tank support element
a₀ acceleration in a potential crash scenario
eₚ extent of projection of rib
D designated direction of flight
h_{f} height of frame 202d
I tank space
S surface of outer hull 10d
X longitudinal centre axis of hydrogen tank

## Claims

1. Hydrogen tank (100, 100a, 100b, 100c, 100d) of or for an aircraft, the hydrogen tank comprising an inner hull (30) bordering a tank space (I) to be filled with liquid hydrogen, an outer hull (10, 10a, 10b, 10c, 10d) encasing the inner hull (30) with an insulation layer (20) in-between, and a tank reinforcement structure (40, 40a, 40b, 40c, 40d) comprising one or various rib/s (41₁, 41₂, 41₃, 41'₃, 41a₁, 41a₂, 41a₃, 41b₁, 41b₂, 41c₁, 41c₂, 41d₁) respectively attached the outer hull (10, 10a, 10b, 10c, 10d) and/or to the inner hull,
wherein the rib/s (41₁, 41₂, 41₃, 41'₃, 41a₁, 41a₂, 41a₃, 41b₁, 41b₂, 41c₁, 41c₂, 41d₁) include/s a lattice configuration forming an energy absorbing structure.

2. Hydrogen tank according to claim 1, wherein at least one of the one or various rib/s (41₁, 41₂, 41₃, 41'₃, 41a₁, 41a₂, 41a₃, 41b₁, 41b₂, 41c₁, 41c₂, 41d₁)
- runs, at least in a section thereof, parallel to a longitudinal centre axis (X) of the hydrogen tank (100b), and/or
- runs, at least in a section thereof, inclined to a longitudinal centre axis (X) of the hydrogen tank (100c), and/or
- runs, at least in a section thereof, around a longitudinal centre axis (X) of the hydrogen tank (100a, 100b, 100c), and/or
- forms a closed curve surrounding the tank space (I).

3. Hydrogen tank according to one or claims 1 or 2, wherein the tank reinforcement structure (40, 40a, 40b, 40c, 40d) includes at least two of said ribs (41₁, 41₂, 41₃, 41'₃, 41a₁, 41a₂, 41a₃, 41b₁, 41b₂, 41c₁, 41c₂, 41d₁) which meet in a point of convergence.

4. Hydrogen tank according to one of the preceding claims, wherein
- at least one of the rib/s (41'₃) includes at least one section which widens towards its edge of attachment; and/or
- at least one of the rib/s (41₁, 41₂, 41₃, 41d₁) includes at least one section which projects, from the inner or the outer hull, with a constant width.

5. Hydrogen tank according to one of the preceding claims, wherein following its longitudinal direction, at least one of the rib/s (41₁, 41₂, 41₃, 41'₃, 41a₁, 41a₂, 41a₃, 41b₁, 41b₂, 41c₁, 41c₂, 41d₁) varies in at least one of its dimensions and/or in a geometry of its lattice configuration and/or in its material.

6. Hydrogen tank according to one of the preceding claims, wherein the tank reinforcement structure (40, 40a, 40b, 40c, 40d) includes at least two of said ribs (41₁, 41₂, 41₃, 41'₃, 41a₁, 41a₂, 41a₃, 41b₁, 41b₂, 41c₁, 41c₂, 41d₁) which differ from each other at least
- in their respective mean extent (eₚ) of projection from the outer surface (S) of the outer hull; and/or
- in their respective width parallel to said surface (S) and orthogonal to their respective longitudinal direction; and/or
- in their respective lattice configuration's geometry; and/or
- in their respective material.

7. Hydrogen tank according to one of the preceding claims, wherein at least one of the rib/s (41₁, 41₂, 41₃, 41'₃, 41a₁, 41a₂, 41a₃, 41b₁, 41b₂, 41c₁, 41c₂, 41d₁) includes at least a section in which its lattice configuration is auxetic.

8. Hydrogen tank according to one of the preceding claims, wherein at least one of the rib/s (41₃, 41'₃, 41a₁, 41a₂, 41b₁, 41b₂, 41b₃, 41c₁, 41c₂, 41d₁) comprises at least a portion extending in a bottom region of the hydrogen tank and/or at least one of the rib/s (41a₃, 41b₃) comprises at least a portion extending in a region which in a designated installation orientation within a fuselage of the aircraft directs forward.

9. Hydrogen tank according to one of the preceding claims, wherein the tank reinforcement structure comprises, further to the one or various rib/s (41₁, 41₂, 41₃, 41'₃, 41a₁, 41a₂, 41a₃, 41b₁, 41b₂, 41c₁, 41c₂, 41d₁) including a lattice configuration, at least one solid reinforcement profile.

10. Hydrogen tank according to one of the preceding claims, further comprising one or various bracket/s mounted to at least one of the rib/s (41₁, 41₂, 41₃, 41'₃, 41a₁, 41a₂, 41a₃, 41b₁, 41b₂,
41c₁, 41c₂, 41d₁) and configured to serve as attachment point/s for installing the hydrogen tank within a fuselage of the aircraft.

11. Hydrogen tank according to one of the preceding claims, wherein at least one of the rib/s (41₁, 41₂, 41₃, 41'₃, 41a₁, 41a₂, 41a₃, 41b₁, 41b₂, 41c₁, 41c₂, 41d₁) comprises
- at least a portion which is printed on the outer surface (S) of the outer hull (10, 10a, 10b, 10c, 10d) by means of additive layer manufacturing and/or
- at least a portion which is joined as a produced component to the outer surface (S) of the outer hull (10, 10a, 10b, 10c, 10d).

12. Method of producing a hydrogen tank (100, 100a, 100b, 100c, 100d) according to one of the preceding claims, wherein the tank reinforcement structure (40, 40a, 40b, 40c, 40d) is at least partially produced by way of additive layer manufacturing.

13. Fuselage of or for an aircraft, the fuselage comprising, in its unpressurised aft space, a hydrogen tank (100, 100a, 100b, 100c, 100d) according to one of claims 1 to 11.

14. Fuselage according to claim 13, wherein in a designated flying orientation of the fuselage, the hydrogen tank (100, 100a, 100b, 100c, 100d) is arranged above a portion of a fuselage reinforcement structure (202d), said portion including a lattice structure.
